# EUROPÄISCHE PATENTSCHRIFT

(11) **EP 1 107 873 B1**
(45) Veröffentlichungstag und Bekanntmachung des Hinweises auf die Patenterteilung: **06.03.2002**
(21) Anmeldenummer: 99948690.5
(22) Anmeldetag: 26.07.1999
(51) Int. Cl.: B60J 1/00

(54) **FENSTERROLLO MIT VERSENKBAREN FÜHRUNGSELEMENTEN**
ROLL-UP BLIND WITH STOWABLE GUIDING MEMBERS FOR THE WINDOW OF A VEHICLE
STORE DE VITRE D'AUTOMOBILE MUNI D'ELEMENTS DE GUIDAGE ESCAMOTABLES

(30) Priorität: 04.08.1998 DE 19835257
(43) Veröffentlichungstag der Anmeldung: 20.06.2001
(73) Patentinhaber: BOS GmbH & Co. KG, 73760 Ostfildern (DE)
(72) Erfinder: BRUNNERT, Bernd, D-73207 Plochingen (DE); EHRENBERGER, Marina, D-73730 Esslingen (DE); SEEL, Holger, D-71134 Aidlingen (DE)
(74) Vertreter: Patentanwälte Rüger, Barthelt & Abel
(86) Internationale Anmeldenummer: DE9902288
(87) Internationale Veröffentlichungsnummer: WO0007837

(56) Entgegenhaltungen:
- EP-A- 0 221 573
- US-A- 5 291 934
- US-A- 5 752 560

## Beschreibung

Aufgrund der Karosserieform bei modernen Kraftfahrzeugen liegt die Heckscheibe verhältnismäßig flach. Wegen dieser Karosserieform kann die steilstehende Sonne über eine relativ große Licht durchlässige Öffnung das Wageninnere aufheizen. Dies ist insbesondere auch deswegen nachteilig, weil sich unterhalb der Heckscheibe in einem großen Abstand die meist dunkel gefärbte Hutablage befindet, die sich im Sonnenlicht stark erwärmt, und die Wärme wegen des großen Abstands von der Fensterscheibe gut ins Wageninnere abgeben kann.

Um dem vorzubeugen, ist aus der gattungsbildenden DE 36 12 165 ein Fensterrollo bekannt, das insbesondere zur Anbringung an der Heckscheibe vorgesehen ist. Zu dem Fensterrollo gehört eine in einem Gehäuse bzw. unterhalb der Hutablage drehbar gelagerte Wickelwelle, an der mit einer Kante eine Rollobahn befestigt ist. Mittels eines Federmotors, der in der rohrförmigen Wickelwelle sitzt, wird die Wickelwelle im Sinne eines Einfahrens der Rollobahn vorgespannt. Die andere Kante der Rollobahn ist an einer Zugstange befestigt, die eine Führungsschiene für zwei schwenkbar gelagerte Hebel dient. Die Hebel sind neben der Wickelwelle um eine Achse schwenkbar, die zu der Achse der Wickelwelle rechtwinklig ist. Mittels einer motorischen Antriebseinrichtung können die beiden Hebel aus einer Stellung, in der sie etwa parallel zur Wickelwelle liegen, in eine aufgerichtete Stellung überführt werden. Da die freien Enden der Hebel mit der Zugstange verbunden sind, wird durch das Hochstellen der Hebel die Rollobahn ausgefahren und aufgespannt.

Die Hebel sind zwar hinreichend biegesteif, zeigen aber dennoch aufgrund ihrer Nachgiebigkeit im Betrieb ein Schwingen in einer Weise, dass sich die Zugstange von der Heckscheibe wegbewegt bzw. gegen diese anschlägt.

Um diesen Effekt zu vermeiden, sind an den Enden der Zugstange zwei Führungselemente angebracht, die sich zumindest im letzten Bereich des Ausfahrhubs der Rollobahn an der Innenseite der Heckscheibe anlegen und im Zusammenwirken mit der Heckscheibe den Hebeln eine Vorspannung erteilen, damit die Hebel mit Kraft die Zugstange in Richtung auf die Heckscheibe drücken können. Dadurch werden die oben erwähnten Schwingeffekte vermieden.

Diese Führungselemente werden benötigt, um ein Beschädigen der Heizdrähte an der Innenseite der Heckscheibe zu vermeiden. Um jedoch diese Funktion zu erreichen, müssen sie entsprechend über die Außenkontur der Zugstange auskragen.

Die auskragenden Führungselemente sind störend, wenn die Zugstange im eingefahrenen Zustand den Auslaufschlitz des Rollogehäuses abdecken oder in ihm verschwinden soll. Sie erfordern am Auslaufschlitz entsprechende Erweiterungen der Schlitzöffnung, damit sie beim Einfahren durch den Auslaufschlitz durchtauchen können.

Ausgehend hiervon ist es Aufgabe der Erfindung, ein gattungsgemäßes Fensterrollo für Fensterscheiben von Kraftfahrzeugen zu schaffen, bei dem die Führungselemente keine zusätzlichen Aussparungen im Bereich des Auslaufschlitzes erfordern.

Diese Aufgabe wird erfindungsgemäß mit dem Fensterrollo mit den Merkmalen des Anspruches 1 gelöst.

Bei dem neuen Fensterrollo sitzen die beiden Führungselemente nicht mehr starr an der Zugstange. Sie sind gegenüber der Zugstange beweglich und können mit Hilfe einer entsprechend gestalteten Lagereinrichtung hinter die Kontur der Zugstange oder eines die Zugstange überdeckenden Deckels zurückgezogen werden. Sie weisen zwei Betriebsstellungen, nämlich eine Betriebsstellung, in der sie hinter die Kontur zurückgezogen sind und eine weitere Betriebsstellung, in der sie über die Kontur der Zugstange überstehen, um ihre Abstützwirkung an der Innenseite der Fensterscheibe zu erbringen.

Bei der neuen Lösung spielt es keine Rolle, ob die Wickelwelle in einem separaten Gehäuse gelagert ist oder unmittelbar an der Unterseite der Hutablage oder aber in einem Gehäuse, das in der Hutablage versenkt eingebaut ist.

Je nach Ausführung kann dann der Auslaufschlitz sich in dem Gehäuse oder in der Hutablage befinden.

Mit der neuen Anordnung ist es ebenfalls möglich, Zugstab und Auslaufschlitz so aufeinander abzustimmen, dass um den Zugstab herum ein schmaler Spalt verbleibt, der über seine gesamte Länge praktisch die gleiche Breite hat, wenn der Zugstab im eingefahrenen Zustand in dem Auslaufschlitz versenkt wird.

Wenn dieser Spalt als unzweckmäßig empfunden wird, weil sich kleine Teile in dem Spalt verklemmen können, besteht auch die Möglichkeit, den Zugstab so zu gestalten, dass er bei eingefahrenem Rollo den Auslaufschlitz vollständig abdeckt.

Die Führungs- oder Abstandelemente können Gleitkufen sein oder kleine Rollen oder Räder, die beim Ausfahren nicht über die Fensterscheibe gleiten, sondern darüberrollen. Eine Beschädigung der Heizdrähte wird dann noch sicherer vermieden.

Die Lagereinrichtung für die Führungselemente kann eine Kulissenführung sein, mit deren Hilfe die Führungselemente zwischen den beiden Endstellungen geführt werden. Die Kulissenführung kann sowohl verwendet werden bei Ausführungsformen mit Gleitkufen als auch bei Ausführungsformen mit drehbaren Rollen.

Im Falle einer Gleitkufe kann die Kulissenführung die Gestalt eines gleichmäßig gekrümmten Schlitzes haben, in dem drehgesichert die Gleitkufe geführt ist. Sie kann aber auch die Form eines L-förmig gestalteten Führungskanals einnehmen, wenn eine drehbare Rolle Verwendung findet. Im Falle eines L-förmigen Führungskanals ist dieser so ausgerichtet, dass ein Abschnitt etwa horizontal in Richtung auf die Heckscheibe verläuft, während der andere Abschnitt von dem der Heckscheibe am nächsten benachbarten Punkt des horizontal verlaufenden Abschnittes nach unten abgeht.

Anstelle der Kulissenführung können die Führungselemente auch an einem Lagerträger angebracht sein, der seinerseits um eine Vertikalachse schwenkbar ist.

In allen Fällen erfolgt das Zurückdrücken der Führungselemente hinter die Kontur der Zugstange durch den Rand des Auslaufschlitzes beim Einfahren des Fensterrollos.

Das Ausfahren in die auskragende Stellung wird am einfachsten mit Hilfe einer Vorspanneinrichtung bewerkstelligt, die die Lagereinrichtung oder das Führungselement in Richtung auf die auskragende Stellung vorspannt.

Im Übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 ein in einem Kraftfahrzeug angeordnetes Fensterrollo, im ausgefahrenen Zustand, in einer Ansicht von außerhalb des Fahrzeugs, stark schematisiert,
Fig. 2 das in der Zugstange gleitende freie Ende eines der Aufspannhebel des Fensterrollos nach Fig. 1,
Fig. 3 ein erstes Ausführungsbeispiel für das Führungselement des Fensterrollos nach Fig. 1, in einer Seitenansicht unter Weglassung der sonstigen Teile der Zugstange und des Fensterrollos,
Fig. 4 die Anordnung nach Fig. 3 beim Einlaufen in den Auslaufschlitz,
Fig. 5 die Anordnung nach Fig. 3 im vollständig eingefahrenen Zustand,
Fig. 6 ein anderes Ausführungsbeispiel für die Führungselemente des Fensterrollos nach Fig. 1, in einer Darstellung ähnlich der nach Fig. 3,
Fig. 7 bis 9 ein Ausführungsbeispiel für die Führungselemente des Fensterrollos nach Fig. 1 mit einem schwenkbaren Lagerträger und einer Darstellung entsprechend wie in Fig. 3.

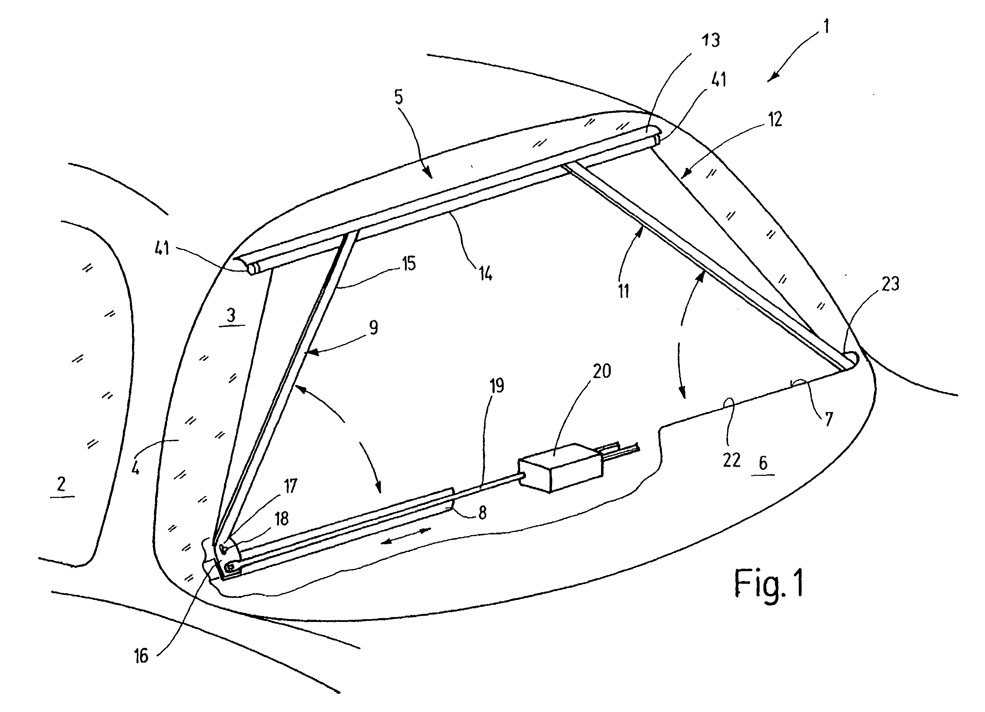

Fig. 1 zeigt in stark schematisierter Weise die Heckpartie eines Kraftfahrzeugs 1 in einer Ansicht von hinten. In der perspektivischen Darstellung ist ein linkes hinteres Seitenfenster 2 sowie ein Heckfenster 3 mit der eingesetzten, üblicherweise gekrümmten Fensterscheibe 4 zu erkennen. Vor der Innenseite der Fensterscheibe 4 befindet sich ein Fensterrollo 5, das im ausgefahrenen Zustand gezeigt ist.

Außerdem ist in Fig. 1 eine aufgebrochen veranschaulichte Hutablage 6 zu erkennen, in der ein über die Breite der Hutablage 6 sich erstreckender Auslaufschlitz 7 enthalten ist.

Zu dem Fensterrollo 5 gehören eine Wickelwelle 8, zwei Aufspannhebel 9 und 11, eine Rollobahn 12 sowie eine Zugstange 13.

Die Wickelwelle 8, die abschnittsweise in dem aufgebrochenen Teil der Hutablage 6 zu erkennen ist, ist unterhalb der Hutablage 6 mit nicht weiter gezeigten Lagereinrichtungen drehbar gelagert. Im Inneren der Wickelwelle 8 befindet sich ein Federmotor, der die Wickelwelle 8 ständig im Sinne eines Aufwickelns der Rollobahn 12 vorspannt. Die Wickelwelle 8. liegt horizontal etwa unterhalb des geraden Auslaufschlitzes 7 und zu diesem parallel.

Die Rollobahn 12 besteht aus einer glatten gelochten Kunststoff-Folie, die mit einer Kante an der Wickelwelle 8 befestigt ist und mit ihrer anderen dazu parallelen Kante 14 an dem Zugstab 13.

Die beiden Aufspannhebel 9 und 11 sind zueinander spiegelbildlich, so dass die Beschreibung für den Aufspannhebel 9 in sinngemäßer Weise auch für den Aufspannhebel 11 gilt. Der Aufspannhebel 9 ist ein zweiarmiger Hebel mit einem Hebelabschnitt 15 sowie einem Hebelabschnitt 16. An der Übergangsstelle zwischen den beiden Hebelabschnitten 15 und 16 befindet sich eine Lagerbohrung 17, mit deren Hilfe der Aufspannhebel 9 auf einem Lagerzapfen 18 schwenkbar gelagert ist. Der Lagerzapfen 18 ist an der Unterseite des weggebrochenen Teils der Hutablage 6 neben dem Auslaufschlitz 7 befestigt. Die Ausrichtung des Lagerzapfens 18 ist so gestaltet, dass der Hebelabschnitt 9 sich in einer Ebene bewegt, die etwa parallel zu der durch die Fensterscheibe 4 definierten Ebene liegt.

Der Aufspannhebel 9 kann aus einer Lage, in der der Hebelabschnitt 15 etwa parallel zu der Wickelwelle 8 verläuft, in eine Stellung überführt werden, in der er etwa parallel zu den seitlichen Begrenzungsrändern des Heckfensters 3 liegt.

Um den Aufspannhebel 9 zwischen diesen beiden Endlagen hin- und herzubewegen, ist der untere Hebelabschnitt 16 über eine Betätigungsstange 19 mit einem Antriebsmotor 20 verbunden. Die Betätigungsstange 19 liegt parallel zu der Wickelwelle 8 und ebenfalls unterhalb der Hutablage 6 zusammen mit der Antriebseinrichtung 20. Der Aufspannhebel 11 ist spiegelbildlich ausgeführt und wird über eine entsprechende Betätigungsstange gegenläufig zu dem Aufspannhebel 9 synchron bewegt.

Im aufgestellten Zustand ragen die beiden Hebelabschnitt 15 der Aufspannhebel 9 und 11, wie gezeigt, durch den Auslaufschlitz 7 nach oben, während sie im eingefahrenen Zustand unter der Hutablage 6 weitgehend verschwinden.

Der Auslaufschlitz 7 wird von zwei zueinander parallelen Schlitzrändern 22 und 23 begrenzt, die einen solchen Abstand voneinander haben, dass die beiden Aufspannhebel 9 und 11 ungehindert durchtreten können und auch in den Aufspannhebeln 9 und 11 die Rollobahn 12 herausgezogen werden kann.

Bei eingefahrenem Rollo wird der Auslaufschlitz 7 von der Zugstange 13 abgedeckt.

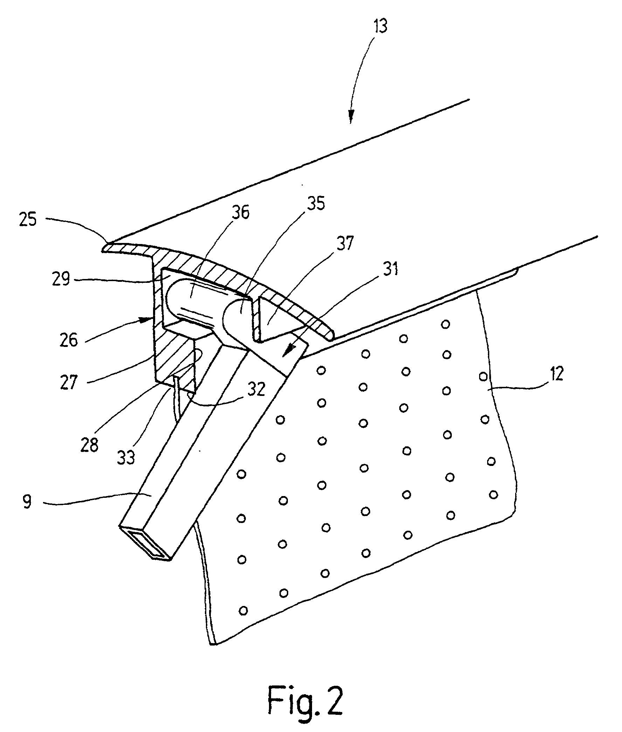

Die Verbindung des Aufspannhebels 9 mit der Zugstange 13 sowie deren Profil sind aus Fig. 2 zu erkennen.

Das Profil der Zugstange 13 setzt sich gedanklich aus einer verhältnismäßig schmalen, zylindrisch leicht nach oben gewölbten Leiste 25 und einem nach unten führenden Mittelsteg 26 zusammen. Es hat somit eine etwa T-förmige Querschnittsgestalt, die über die Länge der Zugstange 13 unverändert ist. Die Breite der Leiste 25 ist so bemessen, dass sie bei eingefahrenem Fensterrollo 5 den Auslaufschlitz 7 überdeckt, wohingegen der Mittelsteg 26 nach unten durch den Auslaufschlitz 7 hindurchtaucht. Die Krümmungsachse der Deckelleiste 25 liegt parallel zu der Längserstreckung der Zugstange 13.

Der Mittelsteg 26 wird von zwei zueinander parallelen Seitenflächen 27 und 28 begrenzt, die auf der Unterseite der Leiste 25 senkrecht stehen.

Ausgehend von der Seitenfläche 28 führt in den Mittelsteg 26 eine im Querschnitt rechteckige Nut 29 hinein, die bis in die Nähe der Seitenwand 27 reicht. Diese Nut 29 läuft ebenfalls über die gesamte Länge der Zugstange 13 durch und dient als Führungsnut für ein Kopfende 31 des Aufspannhebels 9.

Schließlich enthält der Mittelsteg 26 in seiner Unterseite 32 eine Nut 33, in der die entsprechende Kante der Rollobahn 12, beispielsweise durch Verkleben verankert ist.

Das Kopfende 31 ist ein mehrfach abgewinkeltes Formteil, das mit einem nicht weiter erkennbaren Zapfen in dem rohrförmigen Aufspannhebel 9 steckt. Ausgehend von dem freien Ende des Hebels 9 bildet das Kopfstück 31 einen nach oben stehenden Fortsatz 35, der in einen zylindrischen Zapfen 36 übergeht. Der zylindrische Zapfen 36 erstreckt sich rechtwinklig zu der Längsachse des Hebelabschnittes 15 und ist gegenüber diesem seitlich ein Stück weit versetzt.

Der Zapfen 36 liegt in der Nut 39, wodurch eine verschiebliche Kupplung zwischen dem Aufspannhebel 9 und der Zugstange 13 erzeugt wird.

Damit der Zapfen 36 während der Betätigung des Fensterrollos 5 nicht ungewollt aus der Nut 29 freikommen kann, befindet sich im Abstand zu der Nut 29 eine nach unten führende Leiste 37, die an der Unterseite der Leiste 25 angeformt ist. Ihr Abstand von der Seitenfläche 28 entspricht der Dicke des Fortsatzes 35 gemessen in dieser Richtung.

Der Aufspannhebel 11 ist in gleicher, jedoch spiegelbildlicher Weise, ebenfalls in der Nut 29 geführt.

Falls aufgrund der Proportionen im eingefahrenen Zustand die Aufspannhebel 9 und 11 in der Nut 29 kollidieren würden, ist es auch möglich, zwei übereinanderliegende Nuten 29 zu verwenden, wobei jede Nut für einen der Aufspannhebel vorgesehen ist.

Damit beim Ein- und Ausfahren die mit Vorspannung gegen die Innenseite der Fensterscheibe 4 angedrückte Zugstange 13 die Heizdrähte nicht beschädigt, ist sie in der Nähe beider Enden mit Führungselementen 41 versehen. Die Führungselemente 41 sind beweglich gehaltert und stehen in einer Stellung über die Außenkontur der Kopfleiste 25 der Zugstange 13 vor, während sie in der anderen Stellung gegenüber deren Außenkontur zurückgezogen sind.

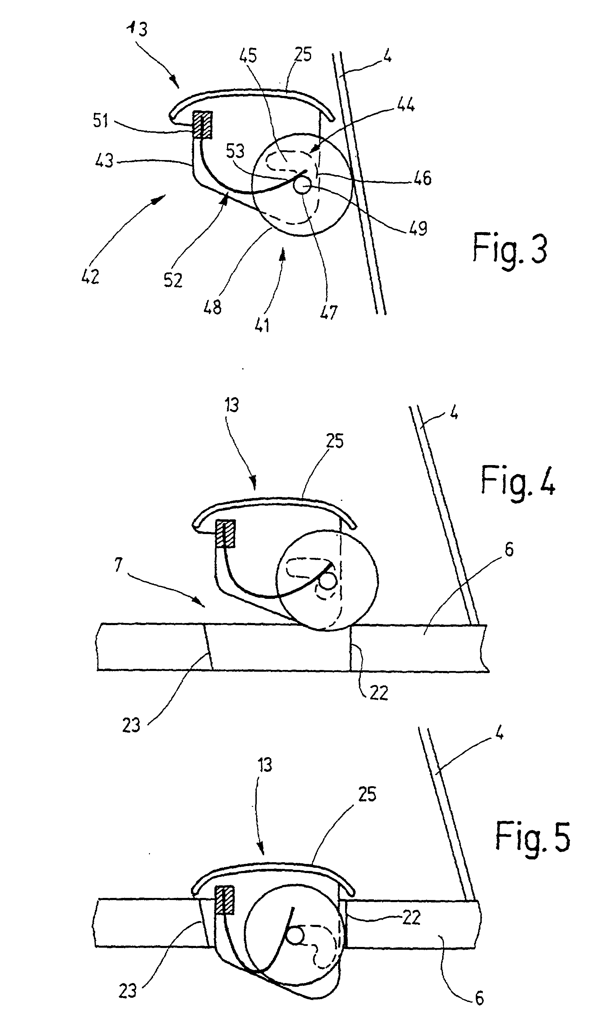

In den Fig. 3 bis 5 ist stark schematisiert eines der Führungselemente 41 zusammen mit der zugehörigen Lagereinrichtung 42 gezeigt.

Die Lagereinrichtung 42 weist zwei mit Abstand parallel nebeneinander verlaufende plattenförmige Lagerflansche 43 auf, die an der Unterseite der Deckelleiste 25 befestigt sind; der dem Betrachter zugekehrte Lagerflansch ist weggelassen. Sie zeigen auf die Fensterscheibe 4. Die Art der Befestigung an der Deckelleiste 25 ist aus Übersichtlichkeitsgründen nicht dargestellt, zumal dies für das Wesen der Erfindung nicht von Bedeutung ist. Wichtig ist lediglich zu bemerken, dass der Mittelsteg 26 in einem ausreichenden Abstand von den beiden Lagerflanschen 43 endet, um Platz für deren Befestigung an der Deckelleiste 25 zu schaffen.

Wegen der Art der Darstellung ist von den beiden zueinander parallelen Lagerflanschen 43 lediglich der eine zu erkennen. Dieser enthält der Fensterscheibe 4 benachbart eine Kulissenführung in Gestalt eines längs dem Umfang geschlossenen Führungsschlitzes 44. Der Führungsschlitz 44 setzt sich aus einem geraden, horizontal verlaufenden Ast 45 sowie einem gekrümmten nach unten wegführenden Ast 46 zusammen. Der gerade, horizontal verlaufende Ast 45 zeigt auf die Fensterscheibe 4 und geht an seinem der Fensterscheibe 4 benachbarten Ende in den absteigenden Ast 46 über.

Der absteigende Ast 46 krümmt sich, wie die Figur erkennen lässt, von der Fensterscheibe 4 weg, so dass sein unteres Ende 47 von einer vertikalen Ebene einen größeren Abstand als der Übergangsbereich zwischen dem Ast 45 und dem Ast 46.

Der Führungsschlitz 44 hat über seine gesamte Länge gleiche Weite.

Mit dem Führungsschlitz 44 fluchtet ein kongruenter Führungsschlitz, der in dem weggebrochenen Lagerflansch enthalten ist.

In dem Spalt zwischen den beiden Lagerflanschen 43 ist das Führungselement 41 angeordnet. Das Führungselement 41 ist eine kleine Rolle mit einer im Wesentlichen zylindrischen Außenumfangsfläche 48 und einer koaxial hindurchführenden Achse 49. Die Achse 49 steht beidends über die Rolle 41 über und sie reicht mit ihren überstehenden Enden in die beiden miteinander fluchtenden Führungsschlitze 44 hinein. Die Weite des Führungsschlitzes 44 entspricht an allen Stellen dem Durchmesser der zylindrischen Achse 49, die zu der Längsertreckung der Zugstange 13 etwa parallel liegt.

In einem zwischen den beiden Lagerflanschen 43 sich erstreckenden Quersteg 51 ist einenends eine Biegefeder 42 eingespannt, die mit ihrem freien Ende 53 gegen die Achse 49 drückt. Der Quersteg 51 befindet sich oberhalb des Schlitzes 44, so dass aufgrund der Vorspannkraft der Biegefeder 52 die Achse 49 in Richtung auf das untere Ende 47 des absteigenden Astes 46 des Führungskanals 44 vorgespannt ist.

Ebenfalls aus Übersichtlichkeitsgründen sind aus Fig. 3 die übrigen Teile des Fensterrollos 5 weggelassen, um das Wesentliche der Lagereinrichtung 42 und des Führungselementes 41 erkennen zu können.

Unter Hinzunahme der Darstellung in den Fig. 4 und 5 wird nunmehr die Funktionsweise erläutert:

Im eingefahrenen Zustand gemäß Fig. 5 liegt die Zugstange 13 mit den Rändern ihrer Deckelleiste 25 auf der Hutablage 6 auf. Sie verschließt den Auslaufschlitz 7, den sie mit der Deckelleiste 25 übergreift. In diesem Zustand sind die Aufspannhebel 9 und 11 unter die Hutablage 6 zurückgezogen (in Fig. 4 und 5 nicht dargestellt) und außerdem ist die Rollobahn 12 auf der Wickelwelle 8 vollständig aufgewickelt.

Im eingefahrenen Zustand liegt aufgrund der relativen Proportionen der Dicke der Hutablage 6 sowie der räumlichen Lage des Führungsschlitz 44 die Rolle 41 mit ihrer Außenumfangsfläche 28 an dem Rand 22 des Auslaufschlitzes 7 an. Ihre Achse 49 befindet sich dabei in dem von der Heckscheibe 4 am weitesten abliegenden Ende des horizontal verlaufenden Astes 45 des Führungsschlitzes 44.

Die Biegefeder 52, die sich an der Umfangsfläche der Achse 49 abstützt, drückt die Führungsrolle 51 gegen den Schlitzrand 22.

Um, ausgehend von dieser Stellung, das Fensterrollo 5 auszufahren, wird die motorische Antriebseinrichtung 20 in Gang gesetzt, wodurch die Aufspannhebel 9, 11 aus ihrer Stellung parallel zu der Wickelwelle 8 zunehmend aufgerichtet werden. Hierdurch bewegen sie die Zugstange 13 nach oben und ziehen dementsprechend die Rollobahn 12 aus dem Auslaufschlitz 7 heraus. Im Verlauf des Ausfahrens taucht die Führungsrolle 41 oberhalb des Auslaufschlitzes 7 auf, so dass sie von dem Schlitzrand 22 nicht mehr länger gegen die Wirkung der Biegefeder 52 zurückgedrückt wird. Die Biegefeder 52 bewegt deswegen die Achse 49 in die Stellung nach Fig. 4, d.h. zunächst in den Übergangsbereich zwischen den beiden Ästen 45 und 46 des Führungsschlitzes 44.

Sobald die Führungsrolle 41 mit ihrer Umfangsfläche 48 vollständig von dem Schlitzrand 22 freigekommen ist, wird die Biegefeder 52 aufgrund ihrer Verankerungsstelle, die, wie oben erwähnt, oberhalb des Führungsschlitzes 44 liegt, die Achse 49 auch nach unten in Richtung auf das untere Ende 47 des vertikalen Astes 46 des Führungskanals 44 bewegen.

Etwa nach 50 bis 90% des maximal möglichen Ausfahrhubs wird nun die Führungsrolle 41, wie Fig. 3 zeigt, mit der Innenseite der Fensterscheibe 4 in Berührung kommen. Da sie über die Äußenkontur der Deckelleiste 25 übersteht, verhindert sie eine Berührung zwischen der Fensterscheibe 4 und der Deckelleiste 25.

Aufgrund der Neigung zwischen der Fensterscheibe 4 und dem Bewegungsweg der beiden Aufspannhebel 9 und 11 wird die Kraft, mit der die Führungsrolle 41 in die Fensterscheibe 4 gedrückt wird, zunehmend größer. Da diese Kraft lediglich eine schräg nach unten gerichtete Komponente an der Achse 49 entwickelt, wird die Achse 49 zunehmend gegen das Ende 47 des Führungskanals 44 gedrückt. Dies wird im Wesentlichen durch den von der Fensterscheibe 4 wegweichenden Verlauf des unteren Astes 46 des Führungskanals 44 erreicht.

Die Biegefeder 52 braucht keine Kraftkomponente aufzunehmen, die aus der Andruckkraft der Führungsrolle 41 gegen die Fensterscheibe 4 herrührt.

Sobald die Führungsrolle 41 mit der Fensterscheibe 4 in Berührung kommt, beginnt sie sich mit oder auf ihrer Achse 49 zu drehen. Dadurch entsteht an der Innenseite der Fensterscheibe 4 lediglich eine Wälzbewegung und keine Gleitbewegung.

Beim Einfahren beginnt der Vorgang in Fig. 3 und es wird kurz vor dem vollständigen Einfahren der Zustand nach Fig. 4 erreicht. Die Berührung zwischen der Außenumfangsfläche 48 der Führungsrolle 51 und der oberen Kante des Schlitzrandes 23 erzeugt eine nach oben gerichtete Kraft, die der Kraft der Biegefeder 52 entgegengerichtet, jedoch größer ist. Die Achse 49 wird deswegen trotz der Wirkung der Feder 52 nach oben angehoben und gelangt in den Übergangsbereich zwischen den beiden Ästen 45 und 46 des Führungsschlitzes 44. Die weitere Abwärtsbewegung drückt sodann die Achse 49 entgegen der Kraft der Biegefeder 52 in den horizontalen Ast 45 zurück.

Es versteht sich, dass die oben erläuterten Vorgänge an beiden Führungselementen 41 neben den Enden der Zugstange 13 stattfinden.

Die neue Anordnung benötigt keine Aussparungen in dem Auslaufschlitz, um das Durchtauchen der Führungselemente 41 zu ermöglichen.

Abweichend von dem gezeigten Ausführungsbeispiel ist es auch möglich, anstelle einer beispielsweise drahtförmigen Biegefeder 52 eine Blattfeder zu nehmen, die an ihrem der Achse 49 benachbarten Ende gegabelt ist, so dass auch die Achse 49 neben beiden Stirnseiten der Führungsrolle 41 auf die Achse 49 eine Kraft ausgeübt wird.

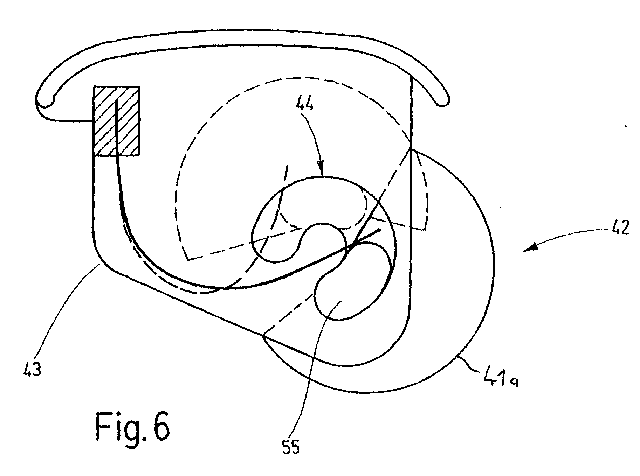

Fig. 6 zeigt ein Ausführungsbeispiel, bei dem an Stelle der Führungsrolle 41 eine Führungskufe 41a Verwendung findet. Der Führungsschlitz 44 hat eine über die Länge konstante Krümmung und überall gleiche Schlitzweite. Seine Lage ist, wie in der Figur dargestellt, bzw. wie sie sich aus der unten angegebenen Funktionsbeschreibung ergibt.

Die Führungskufe 41a hat die Gestalt eines Kreissektors von größer 180° und sie besteht aus einem reibungsarmen Material, beispielsweise PTFE. Die Führungskufe 41a ist eine planparallele Platte, die zwischen die beiden Lagerflansche 43 passt und die in der Nähe ihrer geraden Kante mit zwei Führungszapfen 55 versehen ist, die miteinander fluchten. Jeder Führungszapfen 55 hat eine etwa nierenförmige Gestalt, und zwar hat der Zapfen dieselbe Krümmung wie der Führungskanal 44 und ist lediglich in Umfangsrichtung etwas kürzer. Hierdurch wird die Führungskufe 41a daran gehindert zu kippen. Die einzige Bewegung, die sie vollführen kann, ist eine Bewegung längs der Kreisbahn, die durch den Führungskanal 44 vorgegeben ist.

Der ausgefahrene Zustand ist in Fig. 6 mit durchgezogenen Linien veranschaulicht und man erkennt, wie die Führungskufe 41a mit ihrer Umfangsfläche über den Rand der Deckelleiste 25 übersteht. Ansonsten erfolgt die Bewegung um eine Achse, die wiederum parallel zu der Längserstreckung der Deckelleiste 25 bzw. der Zugstange 13 liegt.

Beim Einfahren wird die Führungskufe 41a ähnlich wie die Führungsrolle 41 von dem Schlitzrand 22 nach oben gedrückt in die in Fig. 6 gestrichelte Position. Dabei wird die Biegefeder 52 stärker durchgebogen.

Umgekehrt drückt die Biegefeder 52 die Führungskufe 41a in die mit durchgezogenen Linien gezeichnete Stellung nach Fig. 6, sobald sie beim Ausfahren des Fensterrollos aus dem Auslaufschlitz 7 freigekommen ist.

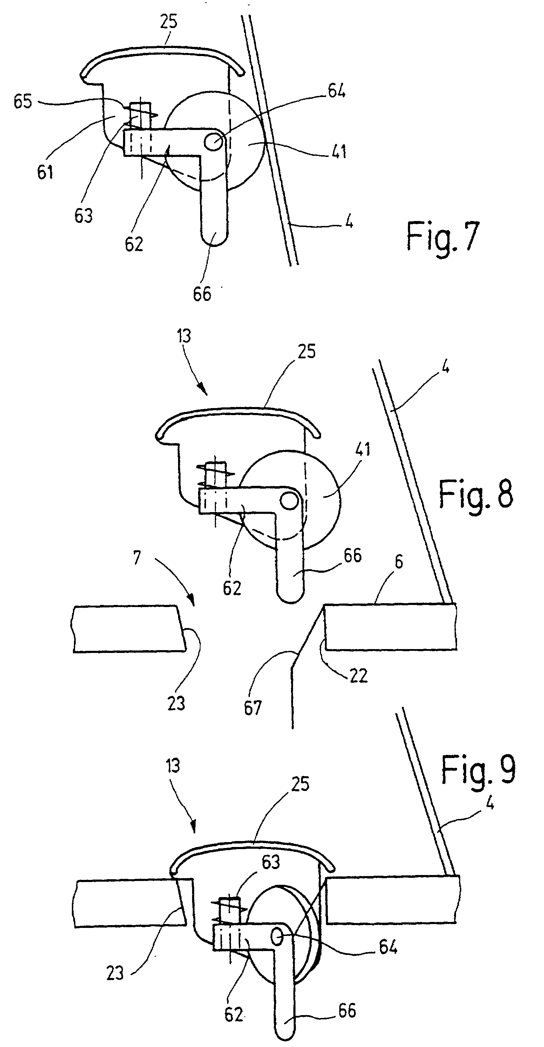

Bei den beiden zuvor erläuterten Ausführungsbeispielen erfolgt die Ausweichbewegung der Führungselemente 41, 41a um eine Achse herum, die parallel zu der Längserstreckung des Schlitzes 7 bzw. parallel zu der Längserstreckung der Zugstange 13 ausgerichtet ist. Die Fig. 7 bis 9, bei denen die Rückzugsbewegung bezüglich einer Achse erfolgt, die auf der Längsachse der Zugstange 13 senkrecht steht.

Auch die Fig. 7 bis 9 sind stark schematisiert und zeigen lediglich die zur Lagerung des Führungselementes 41 erforderlichen Teile in vereinfachter Form.

An einem von der Deckelleiste 25 nach unten führenden Halteflansch 61 ist ein Lagerträger 62 schwenkbar gelagert. Der Lagerträger 62 trägt einen nach oben ragenden Lagerzapfen 63, der in einer nicht gezeigten Lagerbohrung des Halteflansches 61 drehbar gelagert ist. Die Drehachse verläuft vertikal und rechtwinklig zu der Längsachse der Zugstange 13. An dem freien, der Fensterscheibe 4 zugekehrten Ende des Lagerträgers 62 ist die Führungsrolle 41 drehbar gelagert. Mittels einer Wickelfeder 64 wird der Lagerträger 62 in jene Endstellung vorgespannt, in der die Führungsrolle 41 über die Außenkontur der Deckelleiste 25 übersteht. In dieser Stellung verläuft die Drehachse der Führungsrolle 41 parallel zu jenem Abschnitt der üblicherweise gekrümmten Fensterscheibe 4, an dem die Führungsrolle 41 anliegt. Auf diese Weise erzeugt die zwischen der Führungsrolle 41 und der Fensterscheibe 4 wirksame Kraft kein Drehmoment bezüglich des Lagerzapfens 63.

Unterhalb der Achse 64 der Führungsrolle 41 trägt das Lagerteil einen Steuerhebel 66. Dieser Steuerhebel 66 wirkt mit einer Schrägfläche 67 zusammen, die an dem Schlitzrand 22 ausgebildet ist. Die Schrägfläche 67 sorgt dafür, dass beim Eintauchen des Steuerhebels 66 die Berührung zwischen dem Steuerhebel 66 und der Schrägfläche 67 den Lagerträger 62 bezüglich der durch den Lagerzapfen 63 definierten Achse herumschwenkt, damit die Rolle 41 mit ihrer Außenkontur in der gewünschten Weise gegenüber der Außenkontur der Deckelleiste 25 zurückgeklappt wird, um in den Auslaufschlitz 7 zu passen.

Ansonsten ist die Funktion und Wirkungsweise ähnlich wie oben beschrieben.

Ein Fensterrollo für Autoheckscheiben weist zwei Betätigungshebel auf, mit denen die Zugstange im Sinne eines Aus- oder Einfahrens der Rollobahn bewegt wird. Die Hebel sind so gelagert, dass im ausgefahrenen Zustand die Zugstange mit einer Vorspannkraft gegen die Heckscheibe angedrückt wird. Um eine Beschädigung der Heizdrähte zu vermeiden, ist die Zugstange endseitig mit Führungselementen versehen, die beweglich an der Zugstange angebracht sind. Bei ausgefahrenem Rollo stehen sie über die Außenkontur der Zugstange über und halten, indem sie sich selbst an der Heckscheibe anlegen, die Zugstange im Abstand von der Heckscheibe. Beim Einfahren werden sie hinter die Außenkontur der Zugstange zurückgezogen, damit sie in den Schlitz zurückgezogen werden können, aus dem die Rollobahn ausläuft, und zwar ohne dass Ausnehmungen für die Führungselemente an den Schlitzrändern erforderlich sind.

## Patentansprüche

1. Fensterrollo (5) für Fensterscheiben (4) von Kraftfahrzeugen,
mit einer orstsfest drehbar gelagerten Wickelwelle (8),
mit einer Rollobahn (12), die durch einen Auslaufschlitz (7) ausziehbar ist und die zwei zueinander parallele Kanten (14) aufweist, von denen eine an der Wickelwelle befestigt ist,
mit einer ersten Antriebseinrichtung, mittels derer die Wickelwelle (8) in Aufwickelrichtung der Rollobahn (12) vorgespannt ist,
mit einer Zugstange (13), an der die andere Kante (14) der Rollobahn (12) befestigt ist, und
mit wenigstens einem biegesteifen Betätigungselement (9,11), das mittels einer zugeordneten zweiten Antriebseinrichtung (20) aus einer ersten Stellung, in der die Zugstange (13) der Wickelwelle (8) benachbart ist in eine zweite Stellung überführbar ist, in der die Zugstange (13) von der Wickelwelle (8) weiter entfernt ist,
**gekennzeichnet durch**
zwei voneinander beabstandete Führungselemente (41, 41a), die dazu dienen, die Zugstange (13) beim Ausfahren auf der Fensterscheibe (4) zu führen, und die mittels Lagereinrichtungen (42,62) beweglich an der Zugstange (13) derart gelagert sind, dass sie zwischen einer ersten Stellung und einer zweiten Stellung hin- und herbewegbar sind, wobei sie in der ersten Stellung gegenüber der Umfangkontur der Zugstange (13) zurückgezogen sind und in der zweiten Stellung über die Umfangskontur der Zugstange (13) ein Stück weit auskragen, um sie beim Ausfahren von der Fensterscheibe (4) beabstandet zu halten.

2. Fensterrollo nach Anspruch 1, **dadurch gekennzeichnet, dass** die Wickelwelle (8) in einem Gehäuse gelagert ist, das den Auslaufschlitz (7) für die Rollobahn aufweist.

3. Fensterrollo nach Anspruch 2, **dadurch gekennzeichnet, dass** das Gehäuse in eine Hutablage (6) des Kraftfahrzeugs eingebaut ist.

4. Fensterrollo nach Anspruch 1, **dadurch gekennzeichnet, dass** der Auslaufschlitz (7) in einer Hutablage (6) des Kraftfahrzeugs enthalten ist.

5. Fensterrollo nach Anspruch 1, **dadurch gekennzeichnet, dass** die erste Antriebseinrichtung ein Federmotor ist, der sich in der Wickelwelle (8) befindet.

6. Fensterrollo nach Anspruch 1, **dadurch gekennzeichnet, dass** die Zugstange (13) und der Auslaufschlitz (7) in ihrer Form aufeinander abgestimmt, derart, dass die Zugstange (13) bei eingefahrener Rollobahn (12) den Auslaufschlitz (7) bis auf einen um die Zugstange (13) umlaufenden ringförmigen Spalt schließt.

7. Fensterrollo nach Anspruch 1, **dadurch gekennzeichnet, dass** die Zugstange (13) und der Auslaufschlitz (7) in ihrer Form aufeinander abgestimmt, derart, dass die Zugstange (13) bei eingefahrener Rollobahn (12) den Auslaufschlitz (7) abdeckt.

8. Fensterrollo nach Anspruch 1, **dadurch gekennzeichnet, dass** als Betätigungselemente (9,11) zwei neben der Wickelwelle (8) schwenkbar gelagerte Betätigungshebel vorgesehen sind, die mit ihren freien Enden mit der Zugstange (13) zusammenwirken und aus einer Lage, in der sie etwa parallel zu der Wickelwelle (8) verlaufen, in eine Lage schwenkbar sind, in der sie etwa rechtwinkelig zu der Wickelwelle (8) verlaufen.

9. Fensterrollo nach Anspruch 1, **dadurch gekennzeichnet, dass** die Führungselemente Führungskufen (41a) sind.

10. Fensterrollo nach Anspruch 1, **dadurch gekennzeichnet, dass** die Führungselemente drehbare Rollen (41) sind.

11. Fensterrollo nach Anspruch 1, **dadurch gekennzeichnet, dass** die Lagereinrichtung (42) eine Kulissenführung (44) aufweist.

12. Fensterrollo nach Anspruch 11, **dadurch gekennzeichnet, dass** die Kulissenführung einen gekrümmten Führungsschlitz (44) aufweist, mit dem das Führungselement (41) längs einer Bahn geführt ist.

13. Fensterrollo nach Anspruch 12, **dadurch gekennzeichnet, dass** der Führungsschlitz (44) teilkreisförmig gekrümmt ist.

14. Fensterrollo nach Anspruch 12, **dadurch gekennzeichnet, dass** der Führungsschlitz (44) einen etwa L-förmigen Verlauf hat.

15. Fensterrollo nach Anspruch 1, **dadurch gekennzeichnet, dass** die Lagereinrichtung (42) einen um eine Achse (63) schwenkbaren Lagerträger (62) aufweist.

16. Fensterrollo nach Anspruch 15, **dadurch gekennzeichnet, dass** die Achse (63) zumindest angenähert zu einer Ebene parallel verläuft, die von der aufgespannten Rollobahn (12) definiert ist.

17. Fensterrollo nach Anspruch 16, **dadurch gekennzeichnet, dass** die Achse (63) rechtwinkelig zu der Zugstange (13) verläuft.

18. Fensterrollo nach Anspruch 1, **dadurch gekennzeichnet, dass** dem Führungselement (41) eine erste Vorspanneinrichtung (52) zugeordnet ist, mit der das Führungselement (41) mittelbar oder unmittelbar in Richtung auf die auskragende Stellung vorgespannt ist.

19. Fensterrollo nach Anspruch 1 **dadurch gekennzeichnet, dass** der Lagereinrichtung (62) eine zweite Vorspanneinrichtung (65) zugeordnet ist, mit der die Lagereinrichtung (62) mittelbar oder unmittelbar in Richtung auf die auskragende Stellung vorgespannt ist.

20. Fensterrollo nach Anspruch 18, **dadurch gekennzeichnet, dass** die Vorspanneinrichtung (52) eine Biegefeder aufweist.

21. Fensterrollo nach Anspruch 12, **dadurch gekennzeichnet, dass** die Bahn längs der das Führungselement (41) hin- und herbewegbar ist sich um eine Achse krümmt, die zu der Längserstreckung der Zugstange (13) parallel liegt.

## Claims

1. Roller blind (5) for window panes (4) of motor vehicles, with a fixed rotatably mounted winding shaft (8),
with a roller blind sheet (12), which may be drawn out through a run-out slot (7) and which has two parallel edges (14), one of which is fastened to the winding shaft,
with a first drive means, by means of which the winding shaft (8) is pre-tensioned in the wind-up direction of the roller blind sheet (12),
with a pull rod (13), to which the other edge (14) of the roller blind sheet (12) is fastened, and
with at least one rigid operating element (9, 11), which may be moved by means of an associated second drive means (20) out of a first position, in which the pull rod (13) is adjacent to the winding shaft (8), into a second position, in which the pull rod (13) is further removed from the winding shaft (8),
**characterised by**
two spaced guide elements (41, 41a), which serve to guide the pull rod (13) during drawing out on the window pane (4), and which are movably mounted on the pull rod (13) by means of bearing means (42, 64) in such a manner that they may be moved back and forth between a first position and a second position, whereby in the first position they are retracted relative to the circumferential contour of the pull rod (13) and in the second position protrude a short distance beyond the circumferential contour of the pull rod (13) in order to hold it at a distance from the window pane (4) during drawing out.

2. Roller blind according to Claim 1, **characterised in that** the winding shaft (8) is mounted in a housing which has the run-out slot (7) for the roller blind sheet.

3. Roller blind according to Claim 2, **characterised in that** the housing is built into a luggage shelf area (6) of a motor vehicle.

4. Roller blind according to Claim 1, **characterised in that** the run-out slot (7) is contained in a luggage shelf area (6) of the motor vehicle.

5. Roller blind according to Claim 1, **characterised in that** the first drive means is a spring motor which is located in the winding shaft (8).

6. Roller blind according to Claim 1, **characterised in that** the pull rod (13) and the run-out slot (7) are coordinated to one another in shape in such a manner that when the roller blind sheet (12) is retracted the pull rod (13) closes the run-out slot (7) except for an annular gap encircling the pull rod (13).

7. Roller blind according to Claim 1, **characterised in that** the pull rod (13) and the run-out slot (7) are coordinated to one another in shape in such a manner that when the roller blind sheet (12) is retracted the pull rod (13) covers the run-out slot (7).

8. Roller blind according to Claim 1, **characterised in that** two operating levers disposed to swivel next to the winding shaft (8) are provided as operating elements (9, 11) which interact with the pull rod (13) with their free ends and are swivelled out of a position, in which they run approximately parallel to the winding shaft (8), into a position, in which they run approximately at right angles to the winding shaft (8).

9. Roller blind according to Claim 1, **characterised in that** the guide elements are guide rockers (41a).

10. Roller blind according to Claim 1, **characterised in that** the guide elements are rotatable rollers (41).

11. Roller blind according to Claim 1, **characterised in that** the bearing means (42) has a guide bar bracket (44).

12. Roller blind according to Claim 11, **characterised in that** the guide bar bracket has a curved guide slot (44), with which the guide element (41) is guided along a path.

13. Roller blind according to Claim 12, **characterised in that** the guide slot (44) is curved in the shape of a graduated circle.

14. Roller blind according to Claim 12, **characterised in that** the guide slot (44) has an approximately L-shaped curve.

15. Roller blind according to Claim 1, **characterised in that** the bearing means (42) has a bearing support (62) which may be swivelled around an axis means (63).

16. Roller blind according to Claim 15, **characterised in that** the axis means (63) runs parallel at least approximately to a plane which is defined by the stretched out roller blind sheet (12).

17. Roller blind according to Claim 16, **characterised in that** the axis means (63) runs at right angles to the pull rod (13).

18. Roller blind according to Claim 1, **characterised in that** a first pre-tensioning means (52) is assigned to the guide element (41), with which the guide element (41) is indirectly or directly pre-tensioned in the direction of the protruding position.

19. Roller blind according to Claim 1, **characterised in that** a second pre-tensioning means (65) is assigned to the bearing means (62), with which the bearing means (62) is indirectly or directly pre-tensioned in the direction of the protruding position.

20. Roller blind according to Claim 18, **characterised in that** the pre-tensioning means (52) has a spiral spring.

21. Roller blind according to Claim 12, **characterised in that** the path along which the guide element (41) may be moved back and forth curves around an axis lying parallel to the longitudinal extension of the pull rod (13).

## Revendications

1. Store (5) pour vitres (4) de véhicules automobiles, comprenant
un arbre d'enroulement (8) stationnaire monté tournant,
une bande de store (12), qui peut être dépliée à travers une fente de sortie (7) et présente deux bords (14) mutuellement parallèles, dont l'un est fixé à l'arbre d'enroulement (7),
un premier moyen d'entraînement, à l'aide duquel l'arbre d'enroulement (8) est précontraint dans la direction d'enroulement de la bande de store (12),
une barre de traction (13) à laquelle est fixé l'autre bord (14) de la bande de store (12) et
au moins un élément d'actionnement (9, 11) rigide en flexion qui, à l'aide d'un deuxième dispositif d'entraînement (20) associé, peut être amené d'une première position, dans laquelle la barre de traction (13) est située dans le voisinage de l'arbre d'enroulement (8), dans une deuxième position, dans laquelle la barre de traction (13) est éloignée de l'arbre d'enroulement (8),
**caractérisé par**
deux éléments de guidage (41, 41a) disposés à distance l'un de l'autre, qui servent à guider la barre de traction (13) au cours de son déplacement sur la vitre (4) et sont montés mobiles sur la barre de traction (13) au moyen de systèmes de paliers (42, 62) de manière à pouvoir être déplacés suivant un mouvement de va-et-vient entre une première position et une deuxième position, les éléments de guidage, dans la première position, étant rentrés par rapport au contour périphérique de la barre de traction (13) et, dans la deuxième position, étant sortis par rapport au contour périphérique de la barre de traction (13) aux fins de la maintenir écartée de la vitre (4) lors du déploiement du store.

2. Store selon la revendication 1, **caractérisé en ce que** l'arbre d'enroulement (8) est monté dans un carter qui comporte la fente de sortie (7) pour la bande de store.

3. Store selon la revendication 2, **caractérisé en ce que** le carter est monté dans une plage arrière (6) du véhicule.

4. Store selon la revendication 1, **caractérisé en ce que** la fente de sortie (7) est intégrée dans une plage arrière (6) du véhicule.

5. Store selon la revendication 1, **caractérisé en ce que** le premier dispositif d'entraînement est un moteur à ressort qui est logé dans l'arbre d'enroulement (8).

6. Store selon la revendication 1, **caractérisé en ce que** la barre de traction (13) et la fente de sortie (7) sont mutuellement adaptées au niveau de leur forme, de telle sorte que la barre de traction (13), lorsque la bande de store (12) est rentrée, ferme la fente de sortie (7) à l'exception d'une fente annulaire continue autour de la barre de traction (13).

7. Store selon la revendication 1, **caractérisé en ce que** la barre de traction (13) et la fente de sortie (7) sont mutuellement adaptées au niveau de leur forme, de telle sorte que la barre de traction (13) couvre la fente de sortie (7) lorsque la bande de store (12) est rentrée.

8. Store selon la revendication 1, **caractérisé en ce qu'**il est prévu comme éléments d'actionnement (9, 11) deux leviers d'actionnement montés pivotants à côté de l'arbre d'enroulement (8), lesquels leviers coopèrent avec leurs extrémités libres avec la barre de traction (13) et peuvent pivoter depuis une position dans laquelle ils sont sensiblement parallèles à l'arbre d'enroulement (8) vers une position dans laquelle ils s'étendent sensiblement perpendiculairement audit arbre d'enroulement (8).

9. Store selon la revendication 1, **caractérisé en ce que** les éléments de guidage sont des patins de guidage (41a).

10. Store selon la revendication 1, **caractérisé en ce que** les éléments de guidage sont des galets (41) tournants.

11. Store selon la revendication 1, **caractérisé en ce que** le système de palier (42) comporte un système de coulisse (44).

12. Store selon la revendication 11, **caractérisé en ce que** le système de coulisse comporte une fente de guidage (44) courbe, par laquelle l'élément de guidage (41) est guidé le long d'une trajectoire.

13. Store selon la revendication 12, **caractérisé en ce que** la fente de guidage (44) est courbée en forme de partie de cercle.

14. Store selon la revendication 12, **caractérisé en ce que** la fente de guidage (44) présente un tracé sensiblement en forme de L.

15. Store selon la revendication 1, **caractérisé en ce que** le système de palier (42) présente un support de palier (62) qui peut pivoter autour d'un axe (63).

16. Store selon la revendication 15, **caractérisé en ce que** l'axe (63) est au moins sensiblement parallèle à un plan qui est défini par la bande de store dépliée, tendue.

17. Store selon la revendication 16, **caractérisé en ce que** l'axe (63) est perpendiculaire à la barre de traction (13).

18. Store selon la revendication 1, **caractérisé en ce qu'**à l'élément de guidage (41) est associé un premier dispositif de précontrainte (52), par lequel ledit élément de guidage (41) est précontraint de manière directe ou indirecte en direction de la position avancée.

19. Store selon la revendication 1, **caractérisé en ce qu'**au système de palier (62) est associé un deuxième dispositif de précontrainte (65), par lequel ledit système de palier (62) est précontraint de manière directe ou indirecte en direction de la position avancée.

20. Store selon la revendication 18, **caractérisé en ce que** le dispositif de précontrainte (52) est un ressort de flexion .

21. Store selon la revendication 12, **caractérisé en ce que** la trajectoire le long de laquelle l'élément de guidage (41) peut être déplacé est courbée autour d'un axe qui est parallèle à la direction longitudinale de la barre de traction (13).
